# EUROPÄISCHE PATENTANMELDUNG

(11) **EP 0 768 439 A1**
(43) Veröffentlichungstag der Anmeldung: **16.04.1997**
(21) Anmeldenummer: 96202885.8
(22) Anmeldetag: 16.10.1996
(51) Int. Cl.: E04F 15/024, E04F 13/08, F16B 5/02

(54) **Tragkonstruktion für Verkleidungen an Gebäuden, insbesondere Fussböden**

(30) Priorität: 16.10.1995 IT BZ950065
(71) Anmelder: Ecosprint S.r.l., 38015 Lavis (Trento) (IT)
(72) Erfinder: Bellonzi, Luciano, 38015 Lavis (Trento) (IT); Martorelli, Francesco, 38010 Zambana (Trento) (IT); Nardon, Marco, 38010 Zambana (Trento) (IT)
(74) Vertreter: Faraggiana, Vittorio, Dr. Ing.

(57) **Zusammenfassung**

Beschrieben wird eine Tragkonstruktion für Verkleidungen an Gebäuden, insbesondere Fußböden, die an einem Träger, beispielsweise an einer Decke zu befestigen ist. Erfindungsgemäß umfaßt sie eine Vielzahl von Tragelementen (2), von denen jedes durch einen Bolzen (4), der mit Stützfüßen (5) am Träger und oben mit Spannmitteln (10, 11) versehen ist, die gegenüber dem Bolzen höhenverstellbar sind, und Stützgurten (12) gebildet ist, die durch die erwähnten Mittel (10, 11) verspannt werden.

## Beschreibung

Die vorliegende Erfindung bezieht sich auf eine Tragkonstruktion für Verkleidungen an Gebäuden, insbesondere für Fußböden, gemäß dem Oberbegriff des Anspruches 1.

Bekannt ist das Problem der Verlegung von Fußböden, insbesondere von Parkett, wenn diese auf einer am Untergrund gelegte Konstruktion verklebt oder festgenagelt wird. Es ist nämlich kaum möglich, daß der Untergrund vollkommen eben ist, sodaß aufwendige Nivellierungsarbeiten erforderlich sind. So sind beim heutigen Stand der Technik die Wartezeiten zur Trocknung des Untergrundes von langer Dauer. Der Untergrund herkömmlicher Art ist oft sehr schwer und schwierig anpassbar in Anwesenheit zum Beispiel von Rohrleitungen oder zur Anpassung an Wärme- und Lärmisolierungen. Bei den bekannten Systemen bestand immer die Gefahr der Feuchtigkeit, wenn sie aus Unterbetonblöcken oder ähnlichem bestanden. Bei Überschwemmungen waren die auf herkömmlichem Untergrund angebrachten Fußböden überdies Schäden ausgestzt, die eine kostspielige Wiederherstellung erforderten. In Anwesenheit von ständiger Feuchtigkeit wären die Fußböden daher Fäulnisprozessen und Knistergeräuschen ausgesetzt.

Die Aufgabe der vorliegenden Erfindung liegt darin, die oben angedeuteten Mängel des herkömmlichen Untergrunds zu beheben und eine Tragkonstruktion vorzuschlagen, die einen Untergrund bildet, der rasch verwendbar, schnell und einfach ausführbar, rasch den Wärme- und Lärmisolierungen anpassbar, weniger schwer als der herkömmliche Untergrund, wie zum Beispiel die Unterbetonblöcke, und auch zu Sanierungen verwendet werden kann. Die neue den Untergrund bildende Tragkonstruktion soll auch rasch auf wiederholbare Weise mit höchster Anpassbarkeit an jegliche Trägerart nivellierbar sein, auch wenn der Untergrund von Rohrleitungen und s. w. durchzogen sein sollte, oder auch in Anwesenheit von Hindernissen oder Unebenheiten.

Diese und weitere Aufgaben werden erfindungsgemäß durch eine Tragkonstruktion mit den Merkmalen des kennzeichnenden Teiles des Patentanspruches 1 gelöst.

Es ist zu bemerken, daß für die Erstellung der erfindungsgemäßen Tragkonstruktion nur ein einfaches Werkzeug für dessen Höheneinstellung erforderlich ist. Aufgrund des Überbaus des Untergrundes oberhalb der Decke oder eines beliebigen anderen Trägers, ist es möglich, einen Raum für die verschiedensten Zwecke zu verwenden: so können im Zwischenraum zwischen dem Fußboden und dem Träger, an dem die Tragkonstruktion befestigt ist, elektrische und hydraulische Leitungen sowie Isolierungen jeglicher Art untergebracht werden oder der Raum kann auch freigelassen werden, damit die Luft selbst als Isolierung wirkt. Die Elastizität des Fußbodens selbst kann zweckmäßigerweise eingestellt werden, indem zwischen dem Fußboden und der Tragkonstruktion ein Untergrund jeglicher Art und je nach den Erfordernissen gewählt wird.

Bei einer bevorzugten Ausführungsform kann die Nivellierung zweckmäßiger Weise durch einen Laserstrahl überprüft werden. Wird an einem Steckschlüssel beispielsweise eine Kerbe vorgesehen, kann diese mit höchster Genauigkeit mit dem Laserstrahl in Kollimation gebracht werden. So kann der Fußboden mit Genauigkeit und Schnelligkeit gelegt werden, ohne nochmals die Arbeiten aufnehmen zu müssen, nachdem beim Fortschreiten einer Verlegung bemerkt wird, daß die Nivellierung selbst nicht einwandfrei war.

Weitere Merkmale und Vorteile der erfindungsgemäßen Tragkonstruktion gehen aus den abhängigen Ansprüchen hervor.

Ein bevorzugtes Ausführungsbeispiel wird nachstehend unter Bezugnahme auf die Figuren der beigelegten Zeichnung beschrieben. Es zeigen,
- Figur 1: ein Schaubild einer erfindungsgemäßen Tragkonstruktion mit einem teilweise dargestellten auf ihr aufliegenden Untergrund und teilweise das auf diesem letzteren sich bildenden Parkett,
- Figur 2: ein Schaubild von Bestandteilen der Tragkonstruktion, und
- Figur 3: teilweise eine Draufsicht eines Auflagerrohrgurtes der Tragkonstruktion.

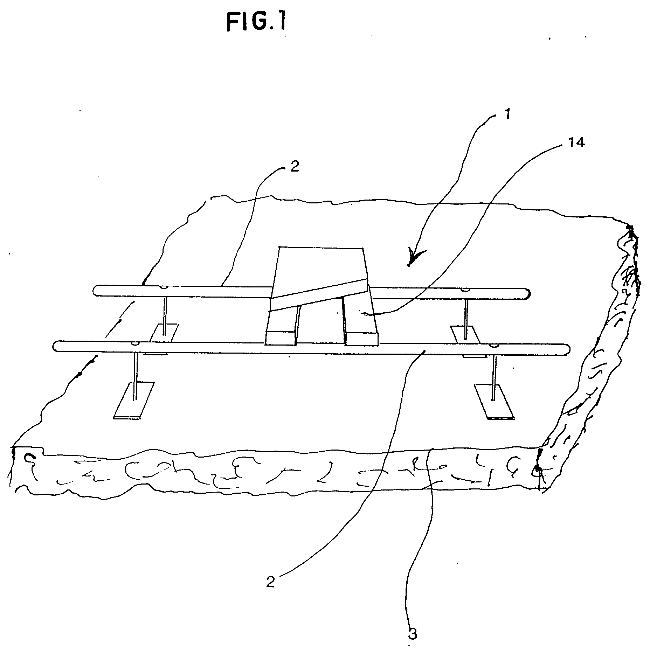

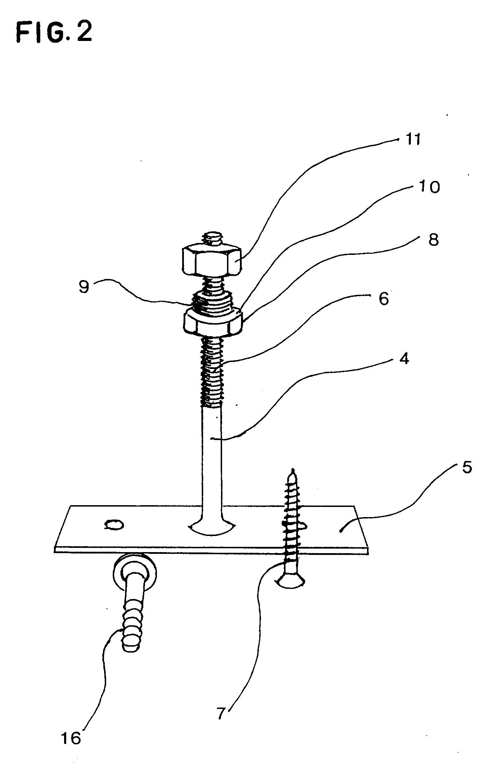

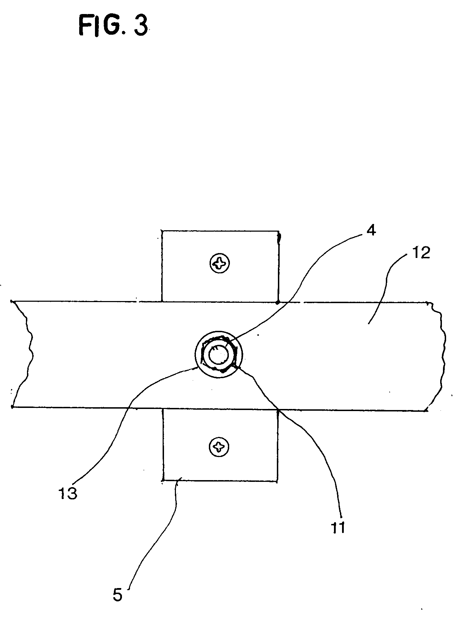

Wie in Figur 1 dargestellt, umfaßt eine im allgemeinen mit der Bezugsziffer 1 angegebene Tragkonstruktion eine Vielzahl von Tragelementen 2, die an einer Decke 3 oder an einem anderen Träger befestigt werden können. Jedes Tragelement 2, wie dies aus Figur 2 und 3 hervorgeht, wird von einem Bolzen 4 gebildet, der unten mit einem Fuß 5 und oben mit einem Gewindeabschnitt 6 versehen ist. Der im vorliegenden Fall durch ein Plättchen gebildeter Fuß 5 weist Bohrungen auf, die dazu bestimmt sind, Dübel 16 und jeweilige Schrauben 7 aufzunehmen, die in der Decke 3 einzuschrauben sind. Oben ist der Geindeabschnitt 6 dazu bestimmt, eine erste Schraubenmutter 8 aufzunehmen, die auf dem Gewindeabschnitt 6 aufschraubbar ist und außen, oben einen Gewindeabschnitt 9 aufweist, der einen Anschlagbund 10 mit der Mutter 8 bildet. Oben ist auf dem Gewindeabschnitt 6 des Bolzens 4 überdies eine Mutter 11 aufschraubbar, die auf dem Gewindeabschnitt 9 aufschraubbar ist, um zwischen sich und dem Anschlagbund 10 die Wanddicke eines Rohrgurtes 12 zu spannen, der vom Gewindeabschnitt 9 der Mutter 8 durchgriffen wird. Um die Mutter 11 auf dem Gewindeabschnitt 9 konzentrisch mit der vom Gewindeabschnitt 9 durchgriffenen Bohrung einzuschrauben, ist im Rohrgurt 12 eine Bohrung 13 mit einer derartigen Abmessung ausgenommen, daß ein nicht dargestellter Steckschlüssel eingeführt werden kann, um auf die Mutter 11 für deren Einschraubung zu wirken.

In einer bevorzugten Ausführungsform weist der nicht dargestellte Steckschlüssel eine Kerbe auf, die mit einem nicht dargestellten Laserstrahl in Kollimation gebracht werden kann. So kann durch Einwirkung auf die Schraubenmutter 8 mit Außengewinde 9 und auf die Schraubenmutter 11 der Rohrgurt 12 auf beliebige Weise in der Höhe eingestellt und mit hoher Genauigkeit in seiner Position justiert werden.

Auf bevorzugter Weise ist der Rohrgurt sowohl für die Auflage auf einem Untergrund 14 als auch für eine verbesserte Abstützung auf dem Bund 10 ein abgeflachtes Rohr aus Metall, wie dies aus Figur 3 hervorgeht. So kann eine Tragkonstruktion aus einer Vielzahl von Tragelementen 2 bestehen, von denen jedes, wie schon angedeutet, durch einen Rohrgurt 13 und den Stehbolzen 4 mit den jeweiligen Schrauben und Schraubenmuttern gebildet ist.

Außer den in der Einleitung der Beschreibung angegebenen Vorteilen beseitigt die Tragkonstruktion beziehungsweise der Untergrund nach der Erfindung jegliche Wartezeit für die Trocknung.

## Patentansprüche

1. Tragkonstruktion für Verkleidungen an Gebäuden, insbesondere Fußböden, die an einem Träger, beispielsweise an einer Decke zu befestigen ist, dadurch gekennzeichnet, daß sie eine Vielzahl von Tragelementen (2) umfaßt, von denen jedes durch einen Bolzen (4), der mit Stützfüßen (5) am Träger und oben mit Spannmitteln (10, 11) versehen ist, die gegenüber dem Bolzen höhenverstellbar sind, und Stützgurten (12) gebildet ist, die durch die erwähnten Mittel (10, 11) verspannt werden.

2. Tragkonstruktion nach Anspruch 1, dadurch gekennzeichnet, daß jedes Spannmittel durch eine Schraubenmutter (8) gebildet ist, die mit einem Außengewinde (9) versehen ist, wobei die Schraubenmutter (8) auf einem oberen Gewindeabschnitt (9) des Bolzens (4) aufschraubbar ist und dessen Außengewinde eine Schraubenmutter (11) aufnimmt, wobei die Schraubenmuttern zwischen sich einen Traggurt (12) der Tragkonstruktion (1) aufnehmen.

3. Tragkonstruktion nach den vorstehenden Ansprüchen, dadurch gekennzeichnet, daß jeder Traggurt (12) durch ein Rohr gebildet wird, das eine Bohrung aufweist, das durch das Außengewinde (9) der Schraubenmutter (8) derart durchgriffen wird, daß die entsprechende Wandung zwischen den beiden Schraubenmuttern verspannt wird, wobei der Durchgangsbohrung für das Außengewinde (9) gegenüberliegend eine Bohrung vorgesehen ist, die einen Steckschlüssel aufnimmt, um auf die Schraubenmutter (11) zu wirken, um sie auf dem Gewindeabschnitt (9) aufzuschrauben.

4. Tragkonstruktion nach Anspruch 3, dadurch gekennzeichnet, daß der Rohrgurt ein Rohr mit ovaler Form ist, in dessen abgeflachten Bereichen sich die Durchgangsbohrungen für das Außengewinde und den Steckschlüssel befindet.

5. Tragkonstruktion nach Anspruch 4, dadurch gekennzeichnet, daß der Steckschlüssel mindestens eine Kerbe aufweist, um mit einem Laserstrahl in Kollimation gebracht zu werden.
